# EUROPÄISCHE PATENTSCHRIFT

(11) **EP 1 683 077 B1**
(45) Veröffentlichungstag und Bekanntmachung des Hinweises auf die Patenterteilung: **25.05.2016**
(21) Anmeldenummer: 03773696.4
(22) Anmeldetag: 03.11.2003
(51) Int. Cl.: G06K 15/02, G06K 15/12

(54) **VORRICHTUNG UND VERFAHREN ZUM DIGITALEN BELICHTEN**
DEVICE AND METHOD FOR DIGITAL EXPOSURE
DISPOSITIF ET PROCEDE D'EXPOSITION NUMERIQUE

(43) Veröffentlichungstag der Anmeldung: 26.07.2006
(73) Patentinhaber: Xeikon Prepress NV, 8900 Ieper (BE)
(72) Erfinder: LUELLAU, Friedrich, 21360 Vögelsen (DE); EGGERS, Stefan, 21465 Wentorf (DE)
(74) Vertreter: Kloiber, Thomas
(86) Internationale Anmeldenummer: PCT/EP2003/012252
(87) Internationale Veröffentlichungsnummer: WO 2005/052853

(56) Entgegenhaltungen:
- EP-A- 0 750 418
- EP-A1- 0 620 676
- DE-A- 19 944 760
- US-A1- 2001 048 460
- US-A1- 2003 021 493
- US-B1- 6 249 306

## Beschreibung

Die Erfindung betrifft eine Vorrichtung und ein Verfahren zum digitalen Belichten von lichtempfindlichen Materialien. Die Vorrichtung besitzt einen elektronischen Bildspeicher zum Speichern einer Bildvorlage, eine Belichtungseinheit, die eine Lichtquelle, einen elektronisch ansteuerbaren Lichtmodulator zur Darstellung eines Teilbildes der Bildvorlage und eine Abbildungsoptik zur Projektion des Teilbildes auf das lichtempfindliche Material umfasst, eine z.B. aus Servomotoren und einer Motorsteuerung bestehende Antriebsvorrichtung zur Bewegung der Belichtungseinheit parallel zur Oberfläche des lichtempfindlichen Materials, wobei die Belichtung des lichtempfindlichen Materials streifenweise erfolgt, eine Scrolleinrichtung zum Scrollen eines Bildstreifens mit den Abmessungen "Lichtmodulatorbreite mal Bildbreite auf dem lichtempfindlichen Material" der Bildvorlage durch den Lichtmodulator und eine Steuervorrichtung zur Synchronisierung der Antriebsvorrichtung mit der Scrolleinrichtung.

Eine derartige Belichtungsvorrichtung ist beispielsweise aus der WO 01/21413 A1 bekannt. Als Lichtmodulator kommt beispielsweise ein durchstrahlter LCD-Bildschirm oder eine reflektierende Mikrospiegelanordnung, auch als DMD oder Digital Mirror Device bekannt, in Frage. Gegenüber einem Belichtungsverfahren, bei dem etwa briefmarkengroße Teilbilder mit zum Belichtungszeitpunkt stillstehender Belichtungseinheit belichtet werden und die Belichtungseinheit zwischen zwei Belichtungen zur nächsten Belichtungsposition verschoben wird (Step-and-Repeat-Verfahren), hat das Scrollen den Vorteil, dass die Belichtung nicht für die zwischenzeitlich zu erfolgenden Positioniervorgänge unterbrochen werden muss.

In der Praxis ist das Verhältnis der Positionierzeit zur Belichtungszeit etwa 1 : 1. Wenn das Scrollingverfahren fast alle Positioniervorgänge einspart, kann dadurch die Bearbeitungszeit für die Fertigstellung des Belichtungsvorgangs um etwa 50 Prozent reduziert werden. Wenn beispielsweise die zu belichtende Material Fläche in 100 x 100 = 10.000 Teilbilder unterteilt und diese im Step-and-Repeat-Verfahren belichtet werden, benötigt man 10.000 Positioniervorgänge. Beim kontinuierlichen, streifenweisen Belichten des lichtempfindlichen Materials sind nur 100 Positioniervorgänge für die 100 Streifen erforderlich, so dass 9.900 Positioniervorgänge und somit 99 Prozent der Positionierzeit eingespart werden. Diese entsprechen in etwa 50 Prozent der Bearbeitungszeit, so dass sich der Durchsatz eines Belichtungsgerätes bei Verwendung des Scrollingverfahrens verdoppeln lässt.

Bei der Verwendung des Scrollingverfahrens tritt allerdings das Problem auf, dass der Lichtmodulator, also der LCD-Bildschirm oder der DMD-Chip selbst keine Schieberegisterfunktionen zur Verfügung stellen. Deshalb müssen die Bilddaten für das gesamte Teilbild immer dann komplett zum Lichtmodulator übertragen werden, wenn sich das Teilbild beim Scrolling nur um eine einzige Bildzeile verschiebt. Das gesamte Teilbild besteht aber typischerweise zum Beispiel aus 1.000 Zeilen mal 1.000 Spalten, so dass sich insgesamt mindestens 1.000.000 Pixel oder mehr ergeben. Bei der Verschiebung um eine Zeile muss die gesamte Bildinformation für alle Pixel übertragen werden. Ein schnelles Scrollen erfordert die Übertragung der gesamten Teilbildinformation mehrere tausend Mal pro Sekunde zu wiederholen. Daraus ergeben sich enorme Datenflüsse , die im Falle des DMD technisch bis zu 7,6 Gbit/s betragen können. Die übliche Ansteuerung des Lichtmodulators mittels eines Computer ist durch diese Datenflüsse überfordert. Auch die Verarbeitung der genauen Position der Belichtungseinheit und die Synchronisation mit den Bilddaten erfordert einen hochauflösenden Echtzeitzugriff auf die momentanen Positionsdaten, was mit einem PC selbst mit Echtzeitbetriebssystem nicht zu realisieren ist.

Aus der US 2003/0021493 A1 ist eine Belichtungsvorrichtung bekannt, bei der eine Belichtungseinheit eine Lichtquelle, einen elektronisch ansteuerbaren Lichtmodulator, eine Ablenkeinheit und eine Abbildungsoptik zur Projektion des vom Lichtmodulator erzeugten Teilbildes auf ein lichtempfindliches Material aufweist. Das lichtempfindliche Material ist auf einer drehbaren Trommel angebracht. Während sich die Trommel dreht, wird durch eine synchrone Bewegung der Ablenkeinheit in Hauptbelichtungsrichtung M sichergestellt, dass das Teilbild auf dem sich mit der Trommel drehenden lichtempfindlichen Material immer an derselben Stelle bleibt. Nach der Belichtung des Teilbildes wird die Ablenkeinheit entgegen der Hauptbelichtungsrichtung M und entgegen der Drehrichtung der Trommel zurückgeschwenkt und gleichzeitig das genannte Teilbild im Lichtmodulator durch ein neues Teilbild ersetzt. Sodann wird die Belichtung des zweiten Teilbildes durch erneutes synchrones Verschwenken der Ablenkeinheit zusammen mit der sich drehenden Trommel fortgesetzt. Entsprechend werden weitere Teilbilder belichtet. Die bekannte Belichtungsvorrichtung verfügt über keine Scrolleinrichtung zum Scrollen der Bildinformation in Hauptbelichtungsrichtung M durch den Lichtmodulator.

Aus der US 6,249,306 B1 ist eine Belichtungsvorrichtung bekannt, bei der eine Belichtungseinheit eine Lichtquelle, einen elektronisch ansteuerbaren Lichtmodulator und eine Abbildungsoptik zur Projektion des vom Lichtmodulator erzeugten Teilbildes auf das lichtempfindliche Material umfasst. Der Lichtmodulator besteht aus einer eindimensionalen Zeile von Leuchtdioden. Mit dieser Belichtungsvorrichtung ist zu jeder Zeit immer nur die Belichtung einer Zeile möglich. Zur Belichtung des gesamten lichtempfindlichen Materials ist daher ein relativ langer Zeitraum erforderlich.

Aufgabe der Erfindung ist es, eine Belichtungsvorrichtung der eingangs genannten Art anzugeben, mit der eine Belichtung im schnellen Scrolling-Modus möglich ist.

Die Erfindung löst diese Aufgabe dadurch, dass ein schneller Zwischenspeicher zum Speicherndes Bildstreifens der Bildvorlage vorgesehen ist, aus dem die Bilddaten für das jeweils zu belichtende Teilbild synchron mit der Bewegung der Belichtungseinheit auf den Lichtmodulator übertragbar sind. Der besondere hardwaremäßige Zwischenspeicher ist für einen besonders schnellen Zugriff geeignet. Er braucht nicht die gesamte Bildvorlage aufzunehmen, sondern lediglich einen streifenförmigen Bereich der Bildvorlage, aus dem wiederum die Bilddaten abrufbar sind, die gerade vom Lichtmodulator für die Belichtung benötigt werden. Dabei wird der Zwischenspeicher über eine geeignete Synchronisierungseinrichtung mit der Bewegung der Belichtungseinheit synchronisiert. Dies ermöglicht eine schnelle synchrone Bilddatenübertragung auf den Lichtmodulator ohne direkte Beteiligung eines Computers, der die genaue Synchronisation in Echtzeit nicht gewährleisten könnte.

Da die Bildinformation von zwei sich nur um eine Zeile unterscheidende Teilbilder sehr redundant ist, tritt die hohe Datenrate nur bei der Übertragung zwischen dem Zwischenspeicher und dem Lichtmodulator auf, denn die in einem Bildstreifen enthaltene Gesamtinformation wird beispielsweise tausendfach an den Lichtmodulator übertragen, wenn dieser 1.000 Zeilen aufweist. Die Auffrischung der im Zwischenspeicher gespeicherten Bildinformationen eines gesamten Bildstreifens kann daher ohne Probleme von einem Computer aus erfolgen, da der hierfür erforderliche Datenfluss etwa um den Faktor 1.000 geringer ausfällt.

Vorzugsweise ist der Zwischenspeicher in der Belichtungseinheit angeordnet. Auf diese Weise können die Datenleitungen zwischen dem Zwischenspeicher und dem Lichtmodulator kurz gehalten werden. Dies reduziert nicht nur die Materialkosten, sondern auch die Störungsempfindlichkeit.

Die Gesamtbearbeitungszeit für die Belichtung einer ganzen Druckplatte kann noch reduziert werden, wenn die Übertragung des nächsten Bildstreifens zeitgleich mit der Belichtung des aktuellen Bildstreifens erfolgen kann. Dies kann vorzugsweise dadurch gelöst werden, dass der Zwischenspeicher zwei Teilspeicher für die Speicherung von zwei Streifen der Bildvorlage umfasst und während der Übertragung der Daten aus einem ersten Teilspeicher zum Lichtmodulator für die Belichtung eines ersten Streifens die Daten für die Belichtung des nächsten Streifens der Bildvorlage vom Computer zum zweiten Teilspeicher übertragbar sind. Dann trägt die Zeit zur Übertragung der Daten vom Bildspeicher des Computers zum Zwischenspeicher der Belichtungseinheit nicht zur Gesamtbearbeitungszeit bei.

In eine bevorzugten Ausführungsform besteht die Steuervorrichtung aus einem Computer mit einem Steuerprogramm, wobei auch der Bildspeicher im Computer untergebracht ist. Auf diese Weise können die nicht besonders zeitkritischen Komponenten der Belichtungsvorrichtung durch einen kostengünstig zu beschaffenden Computer dargestellt werden.

In Ausgestaltung der Erfindung ist vorgesehen, dass das Steuerprogramm einen Belichtungsdatenmanager, einen Bilddatenmanager und einen Positionsdatenmanager umfasst, wobei die Bilddaten des Bildspeichers durch den Belichtungsdatenmanager in für die streifenweise Belichtung geeignete Datenpakete aufgeteilt und an den Bilddatenmanager übergeben werden, wobei der Belichtungsdatenmanager Positionsdaten und Geschwindigkeitsdaten für die Motorsteuerung erzeugt, die an den Positionsdatenmanager übergeben werden.

In Ausgestaltung der Erfindung umfasst das Steuerprogramm die Scrolleinrichtung, die mit einer hardwaremäßig ausgestalteten Triggerkarte zusammenwirkt, wobei die Triggerkarte mit Positionssensoren verbunden ist, die Daten über die tatsächliche Position der Belichtungseinheit liefern, wobei die Triggerkarte den Datenfluss vom Zwischenspeicher zum Lichtmodulator synchron mit der Bewegung der Belichtungseinheit steuert und ein Handshake zwischen Triggerkarte und Motorsteuerung die Motorsteuerung veranlasst, die Positions- und Geschwindigkeitsdaten aus dem Positionsdatenmanager abzurufen und die Servomotoren entsprechend anzusteuern. Die Darstellung der Triggerfunktionen mittels einer hardwaremäßigen Triggerkarte garantiert eine schnelle Ablaufsteuerung in Echtzeit, die mit einer direkten softwaremäßigen Darstellung nicht möglich wäre.

In Weiterbildung der Erfindung ist vorgesehen, dass die Scrolleinrichtung mit dem Bilddatenmanager derart zusammenwirkt, dass die stufenweise Übertragung der Bilddaten vom Bilddatenmanager zum Zwischenspeicher immer dann erfolgt, wenn aus dem jeweiligen Teilspeicher gerade keine Daten für die Ansteuerung des Lichtmodulators entnommen werden. Dadurch erhält man eine zweckmäßige Synchronisation der streifenweisen Übertragung der Bilddaten aus dem Computer zur Belichtungseinheit.

Aus dem Bereich der Fotofinishing-Geräte zur Belichtung von Fotopapier sind Belichter mit Scrolling-Funktion bekannt, bei denen die Einschaltdauer des Lichtmodulatorpixels sehr klein ist im Verhältnis zu der Zeit zum Überfahren eines Pixels bei gegebener Relativgeschwindigkeit zwischen Lichtmodulator und zu belichtender Unterlage. Durch die relativ kurze Einschaltdauer vermeidet man das Verschmieren der Kanten der Pixel und erreicht somit eine schärfere Darstellung. Die kurzen Einschaltdauern sind nur deshalb zu vertreten, weil das Fotopapier hochlichtempfindlich ist.

Bei der Belichtung von vielen anderen lichtempfindlichen Materialien wie zum Beispiel Druckplatten oder Siebdruckschablonen hingegen hat man nur eine sehr geringe Lichtempfindlichkeit. Deshalb führt eine im Verhältnis zur Fahrzeit beim Überfahren eines Pixels relativ kurze Einschaltdauer zur einer insgesamt sehr langen Bearbeitungszeit für die gesamte Fläche des lichtempfindlichen Materials. Zur Verkürzung der Bearbeitungsdauer muss daher bei der Belichtung das Verhältnis von Einschaltzeit zu Fahrzeit möglichst groß gewählt werden. Eine bevorzugte Ausführungsform der erfindungsgemäßen Belichtungsvorrichtung sieht daher vor, dass die Belichtungszeit für ein Pixel gleich der Fahrzeit ist, die die Belichtungseinheit zum Überfahren einer Pixelbreite benötigt. Dabei kommt es überraschenderweise nicht zum Verschmieren der Pixelkanten, wie sich in Versuchen herausgestellt hat. Eine Erklärung hierfür könnte die relative steile Gamma-Kurve und das Entwicklungsverfahren für solche gering lichtempfindlichen Materialien bieten.

Zur Vermeidung sichtbarer Übergänge von einem Bildstreifen zum benachbarten Bildstreifen wird vorgeschlagen, dass die Aufteilung der Bildvorlage in Streifen derart erfolgt, dass sich die Streifen teilweise überlappen und das die zur Belichtung dienende Lichtmenge pro Pixel zu den Rändern der Streifen hin abnehmend angeordnet ist, so dass sich eine gleichmäßige Belichtung der gesamten Fläche des lichtempfindlichen Materials ergibt. Auch ohne eine teilweise Überlappung, also bei direkter Aneinanderreihung von Belichtungsstreifen ist mit der Notwendigkeit zu rechnen, den optischen Eindruck der linken und rechten Bildstreifenkante anzugleichen. Auch dies kann über die Reduzierung der Lichtmenge für einzelne Spalten des Bildstreifens geschehen. Für die Reduzierung der Lichtmenge in den Randbereichen der Streifen kann entweder eine reduzierte Lichtintensität bei gleichbleibender Belichtungszeit oder eine reduzierte Belichtungszeit bei gleichbleibender Lichtintensität angewandt werden. Insbesondere bei Mikrospiegelanordnungen (DMD) kann die Lichtintensität nur digital geschaltet werden. Dies bedeutet entweder 100 Prozent eingeschaltet oder ganz ausgeschaltet. Deshalb kommt hier nur die Steuerung der Lichtmenge durch verkürzte Belichtungszeit in Frage. Dies wiederum kann durch verkürzte Einschaltzeiten aller in Bewegungsrichtung der Belichtungseinheit hintereinander angeordneten Pixel des Lichtmodulators geschehen oder im Falle des DMDs nur bei gleichbleibenden Einschaltzeiten durch Reduzierung der insgesamt an der Belichtung beteiligten in Fahrtrichtung liegenden Pixel. Die quantitative Beschreibung der Anzeigeveränderung wird als Overlay bezeichnet.

Zur Erfindung gehört auch ein Verfahren zur Belichtung von lichtempfindlichen Materialien unter Verwendung der vorbeschriebenen Belichtungsvorrichtung, bei dem die Bilddaten und Positions- bzw. Geschwindigkeitsdaten wie oben beschrieben erzeugt und weiterverarbeitet werden.

Ein Ausführungsbeispiel der Erfindung wird nachfolgend anhand der Zeichnung näher erläutert. Die einzige Figur zeigt:

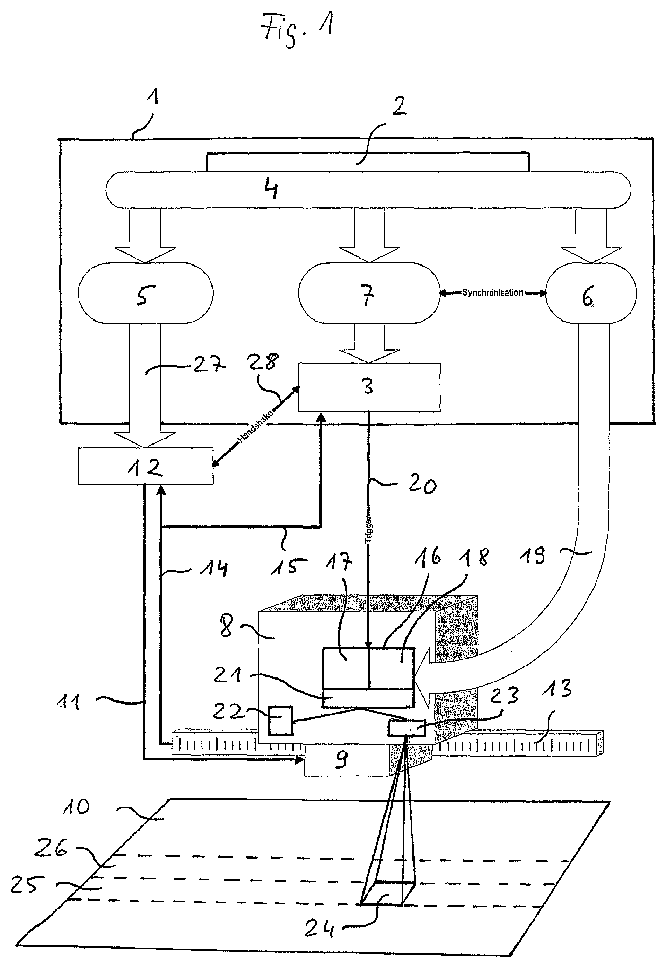

- Figur 1:: eine schematische Darstellung einer erfindungsgemäßen Belichtungsvorrichtung

In der Figur 1 erkennt man eine Steuervorrichtung 1, die durch einen Rahmen dargestellt ist. Die Steuervorrichtung 1 besteht aus einem Computer mit einem Bildspeicher 2, einem Steuerprogramm und einer Triggerkarte 3. Das Steuerprogramm besteht aus einem Belichtungsdatenmanager 4, der die höchste Programmebene darstellt, einem Positionsdatenmanager 5, einem Bilddatenmanager 6 und einer Scrolleinrichtung 7. Die Datenflüsse sind mittels Pfeilen angedeutet.

Außerhalb der Steuervorrichtung 1 ist eine Belichtungseinheit 8 vorgesehen, die mittels zweier Servomotoren, von denen in der Figur 1 nur ein Servomotor 9 dargestellt ist, über der Oberfläche einer zu belichtenden Druckplatte 10 zweidimensional verschiebbar angeordnet ist. Der Servomotor 9 ist als Linearmotor ausgestaltet und über eine Steuerleitung 11 mit einer Motorsteuerung 12 verbunden. Dasselbe gilt für den anderen, nicht dargestellten Servomotor. Ein Positionssensor 13 erzeugt Positionsdaten zur jeweiligen Position der Belichtungseinheit 8 und überträgt diese über eine Signalleitung 14 zur Motorsteuerung 12 und über eine weitere Signalleitung 15 zur Triggerkarte 3. Entsprechendes gilt für einen nicht dargestellten Positionssensor zur Erzeugung von Positionsdaten der anderen Positionskoordinate.

Die Belichtungseinheit 8 enthält einen Zwischenspeicher 16, der aus zwei Teilspeichern 17, 18 besteht. Der Zwischenspeicher 16 wird über eine Datenleitung 19 aus der Steuervorrichtung 1 (Computer) mit Bilddaten und Overlaydaten versorgt. Weiterhin ist der Zwischenspeicher 16 über eine Triggerleitung 20 mit der Triggerkarte 3 verbunden. Schließlich steht der Zwischenspeicher 16 auch mit einem Lichtmodulator 21, im vorliegenden Fall ein DMD, in Verbindung. Das Licht einer Lichtquelle fällt auf den Lichtmodulator 21, welcher das modulierte Licht in eine Abbildungsoptik 23 lenkt. Die Abbildungsoptik 23 projiziert ein Teilbild 24 auf das lichtempfindliche Material 10. Die Belichtung des lichtempfindlichen Materials 10 erfolgt streifenweise, wobei zwei Streifen 25, 26 als Beispiel hervorgehoben sind.

Am Belichtungsprozess sind im Wesentlichen drei Instanzen beteiligt. Zum einen muss die Belichtungseinheit 8 positioniert werden. Die Softwareinstanz hierfür ist der Positionsdatenmanager 5, die zugehörige Hardware wird durch die Motorsteuerung 12 im Zusammenwirken mit den Linearmotoren 9 und den Positionssensoren 13 dargestellt.

Zum zweiten müssen die Bilddaten zur Anzeige gebracht werden. Die Softwareinstanz hierfür ist der Bilddatenmanager 6, die zugehörige Hardware ist der Zwischenspeicher 16 in der Belichtungseinheit 8.

Zum dritten muss die Bewegung der Belichtungseinheit 8 und der Datenfluss der Bilddaten synchronisiert werden. Die Softwareinstanz hierfür ist die Scrolleinrichtung 7, die zugehörige Hardware findet man in der Triggerkarte 3, die in den Computer eingebaut ist, welcher hier als Steuervorrichtung 1 dient.

Die Triggerkarte 3 hat einen Eingang für die Signalleitung 15 zur Übertragung der Positionsdaten des Positionssensors 13, der die aktuelle Position der Belichtungseinheit 8 mit einer Auflösung von 0,1 µm zur Verfügung stellt. Weiterhin verfügt die Triggerkarte 3 über einen nicht gezeigten Speicher, in dem Anweisungen für mindestens die Belichtung eines kompletten Streifens 25, 26 mit den Abmessungen "Lichtmodulatorbreite mal Bildbreite auf dem lichtempfindlichen Material 10" abgelegt werden können. Die Abarbeitung dieser Anweisungen geschieht mit Echtzeitauflösung von 33 MHz in einem FPGA auf der Triggerkarte 3. Dabei können abhängig von der Position der Belichtungseinheit 8, der Systemzeit und dem aktuellen Zustand der Eingangsleitungen die Ausgänge der Triggerkarte individuell geschaltet werden.

Die Bildinformation ist beim Scrollingprozess in hohem Maße redundant. Die Overlaydaten bleiben für alle Einzelbelichtungen dieselben. Bei jeder Einzelbelichtung entfällt nur eine Zeile der Bilddaten des gesamten Teilbildes 24. Die anderen Zeilen rücken jeweils um eine Position auf und die freiwerdende Zeile am Ende erhält neue Daten vom Zwischenspeicher 16. Dabei werden die Bilddaten beispielsweise zur Belichtung eines Bildstreifens 25 aus einem Teilspeicher 17 bzw. 18 entnommen und mit den ebenfalls im Zwischenspeicher abgelegten Overlayinformationen verknüpft, während der andere Teilspeicher 18 bzw. 17 über die Datenleitung 19 jeweils mit neuen Bildinformationen für den nachfolgend zu belichtenden Bildstreifen 26 versorgt wird. Da die schnelle Datenübertragung allein auf einer Platine in der Belichtungseinheit 8 erfolgt, ist eine dauerhafte Datenrate von 64Bit x 120 MHz möglich.

Im Belichtungsdatenmanager 4 werden die Daten aus dem Bildspeicher 2 analysiert und an die einzelnen Unterprogramme weiterverteilt. Der Positionsdatenmanager erhält dabei eine Liste von Positionen, Geschwindigkeiten bzw. Geschwindigkeitskurven, die nacheinander angefahren werden müssen. Der Bilddatenmanager 6 erhält die Bilddaten, die im Lichtmodulator 21 dargestellt werden müssen und die Overlaydaten, die dabei angewendet werden sollen. Die Scrolleinrichtung 7 erhält die Information zur Startfreigabe der Servomotoren 9 und der punktgenauen Auslösung der Belichtungen. Der Datenfluss ist dabei jeweils über einen FIFO-Puffer realisiert, so dass der Belichtungsdatenmanager 4 die Daten vorverarbeiten kann und während der Belichtung keine Engpässe auftreten.

Positionsdatenmanager 5, Bilddatenmanager 6 und Scrolleinrichtung 7 versorgen die leerlaufenden Speicher von Motorsteuerung 12, Zwischenspeicher 16 und Triggerkarte 3 fortlaufend mit neuen Daten.

Die Motorsteuerung 12 und der Zwischenspeicher 16 werden über die Datenleitungen 27 und 19 zwar mit Daten versorgt, jedoch nicht über den Zeitpunkt der Verwendung bzw. Weiterleitung der jeweiligen Daten unterrichtet. Diese Funktion übernimmt die Triggerkarte 3. Zwischen der Motorsteuerung 12 und der Triggerkarte 3 ist daher eine Handshake-Leitung 28 vorgesehen, über die einerseits die Triggerkarte 3 das Vorhandensein eines neuen Fahrbefehls und den Abschluss des Fahrbefehls erfährt. Andererseits gibt die Triggerkarte 3 über die Handshake-Leitung 28 die Freigabe an die Motorsteuerung 12 zur Ausführung des jeweiligen Fahrbefehls.

Die Triggerleitung 20 zwischen der Triggerkarte 3 und dem Zwischenspeicher 16 überträgt Triggerimpulse, die jeweils die Übertragung des nächsten Teilbildes 24 vom Zwischenspeicher 16 zum Lichtmodulator 21 auslösen. Zur Belichtung eines Bildstreifens 25, 26 steht die Belichtungseinheit 8 am Anfang des Bildstreifens 25 und die Motorsteuerung 12 erhält als neue Zielposition die Endposition des Bildstreifens 25. Der Zwischenspeicher 16 erhält nacheinander die Bilddaten der nacheinander zu belichtenden Bildstreifen 25, 26. Außerdem erhält er Informationen darüber, in welchen Speicherpositionen die einzelnen nacheinander auf den Lichtmodulator 21 zu übertragenden Bilder und die jeweils zu verwendenden Overlaydaten abgelegt sind. Die Triggerkarte 3 erhält Informationen darüber, an welchen Positionen die einzelnen Bildzeilen belichtet werden müssen.

Die Triggerkarte 3 stellt das Vorhandensein aller Informationen fest und löst daraufhin die Positionierung der Belichtungseinheit 8 per Handshake mit der Motorsteuerung 12 aus. Mit Erreichen jeder vorprogrammierten Position wird ein entsprechender Impuls auf der Triggerleitung 20 ausgegeben, so dass die Belichtung synchronisiert mit der Bewegung erfolgt. Dabei wird abgezählt für jedes im Zwischenspeicher 16 abgelegte Bild ein Triggerimpuls erzeugt.

Während ein solcher Scrollvorgang abläuft, wird der jeweils nicht für die Übertragung von Daten auf den Lichtmodulator 21 verwendete Teilspeicher 17 bzw. 18 parallel mit den Bildinformationen für den nächsten Bildstreifen 26 geladen, so dass die Belichtung des nächsten Bildstreifens 26 gleich anschließend an die Belichtung des vorhergehenden Bildstreifens 25 erfolgen kann.

### BEZUGSZEICHENLISTE

- 1.: Steuervorrichtung
- 2.: Bildspeicher
- 3.: Triggerkarte
- 4.: Belichtungsdatenmanager
- 5.: Positionsdatenmanager
- 6.: Bilddatenmanager
- 7.: Scrolleinrichtung
- 8.: Belichtungseinheit
- 9.: Servomotor
- 10.: lichtempfindliches Material
- 11.: Steuerleitung
- 12.: Motorsteuerung
- 13.: Positionssensor
- 14.: Signalleitung
- 15.: Signalleitung
- 16.: Zwischenspeicher
- 17.: Teilspeicher
- 18.: Teilspeicher
- 19.: Datenleitung
- 20.: Triggerleitung
- 21.: Lichtmodulator
- 22.: Lichtquelle
- 23.: Abbildungsoptik
- 24.: Teilbild
- 25.: Bildstreifen
- 26.: Bildstreifen
- 27.: Datenleitung
- 28.: Hand-shake-Leitung

## Patentansprüche

1. Vorrichtung zum digitalen Belichten von lichtempfindlichen Materialien, mit einem elektronischen Bildspeicher (2) zum Speichern einer Bildvorlage, mit einer Belichtungseinheit (8), die eine Lichtquelle (22), einen elektronisch ansteuerbaren Lichtmodulator (21) zur Darstellung eines Teilbildes (24) der Bildvorlage und eine Abbildungsoptik (23) zur Projektion des Teilbildes (24) auf das lichtempfindliche Material (10) umfasst, mit einer aus Motoren (9) und einer Motorsteuerung (12) bestehenden Antriebsvorrichtung zur Bewegung der Belichtungseinheit (8) parallel zur Oberfläche des lichtempfindlichen Materials (10), wobei die Belichtung des lichtempfindlichen Materials (10) streifenweise erfolgt, mit einer Scrolleinrichtung (7) zum Scrollen eines Bildstreifens (25, 26) mit den Abmessungen "Lichtmodulatorbreite mal Bildbreite auf dem lichtempfindlichen Material (10)" der Bildvorlage durch den Lichtmodulator (21) und einer Steuervorrichtung (1) zur Synchronisierung der Antriebsvorrichtung (9, 12) mit der Scrolleinrichtung (7), **dadurch gekennzeichnet, dass** ein schneller Zwischenspeicher (16) zum Speichern des Bildstreifens (25, 26) der Bildvorlage vorgesehen ist, aus dem die Bilddaten für das jeweils zu belichtende Teilbild (24) synchron mit der Bewegung der Belichtungseinheit (8) auf den Lichtmodulator (21) übertragbar sind.

2. Vorrichtung nach Anspruch 1, **dadurch gekennzeichnet, dass** der Zwischenspeicher (16) in der Belichtungseinheit (8) angeordnet ist.

3. Vorrichtung nach Anspruch 1 oder 2, **dadurch gekennzeichnet, dass** der Zwischenspeicher (16) zwei Teilspeicher (17, 18) für die Speicherung von zwei Bildstreifen (25, 26) der Bildvorlage umfasst und dass während der Übertragung der Daten aus einem ersten Teilspeicher (17) zum Lichtmodulator (21) für die Belichtung eines ersten Bildstreifens (25) die Daten für die Belichtung des nächsten Bildstreifens (26) der Bildvorlage vom Bildspeicher (2) zum zweiten Teilspeicher (18) übertragbar sind.

4. Vorrichtung nach einem der vorgehenden Ansprüche, **dadurch gekennzeichnet, dass** die Steuervorrichtung (1) aus einem Computer mit einem Steuerprogramm besteht, wobei auch der Bildspeicher (2) im Computer untergebracht ist.

5. Vorrichtung nach Anspruch 4, **dadurch gekennzeichnet, dass** das Steuerprogramm einen Belichtungsdatenmanager (4), einen Bilddatenmanager (6) und einen Positionsdatenmanager (5) umfasst, wobei die Bilddaten des Bildspeichers (2) durch den Belichtungsdatenmanager (4) in für die streifenweise Belichtung geeignete Datenpakete aufgeteilt und an den Bilddatenmanager (6) übergeben werden, wobei der Belichtungsdatenmanager (4) Positionsdaten und Geschwindigkeitsdaten für die Motorsteuerung (12) erzeugt, die an den Positionsdatenmanager (5) übergeben werden.

6. Vorrichtung nach Anspruch 5, **dadurch gekennzeichnet, dass** die Steuervorrichtung (1) die Scrolleinrichtung (7) umfasst, die mit einer hardwaremäßig ausgestalteten Triggerkarte (3) zusammenwirkt, dass die Triggerkarte (3) mit Positionssensoren (13) verbunden ist, die Daten über die tatsächliche Position der Belichtungseinheit (8) liefern, und dass die Triggerkarte (3) den Datenfluss vom Zwischenspeicher (16) zum Lichtmodulator (21) synchron mit der Bewegung der Belichtungseinheit (8) steuert, wobei ein Handshake (28) zwischen Triggerkarte (3) und Motorsteuerung (12) die Motorsteuerung (12) veranlasst, die Positions- und Geschwindigkeitsdaten aus dem Positionsdatenmanager (5) abzurufen und die Servomotoren (9) entsprechend anzusteuern.

7. Vorrichtung nach Anspruch 6, **dadurch gekennzeichnet, dass** die Scrolleinrichtung (7) mit dem Bilddatenmanager (6) derart zusammenwirkt, dass die streifenweise Übertragung der Bilddaten vom Bilddatenmanager (6) zum Zwischenspeicher (16) immer dann erfolgt, wenn aus dem jeweiligen Teilspeicher (17, 18) gerade keine Daten für die Ansteuerung des Lichtmodulators (21) entnommen werden.

8. Vorrichtung nach einem der vorhergehenden Ansprüche, **dadurch gekennzeichnet, dass** die Belichtungszeit für ein Pixel ungefähr gleich der Fahrzeit ist, die die Belichtungseinheit (8) zum Überfahren einer Pixelbreite benötigt.

9. Vorrichtung nach einem der vorhergehenden Ansprüche, **dadurch gekennzeichnet, dass** die Aufteilung der Bildvorlage in Bildstreifen derart erfolgt, dass sich die Bildstreifen (25, 26) teilweise überlappen und dass die zur Belichtung dienende Lichtmenge pro in Scrollrichtung orientierter Pixelspalte zu den Rändern der Bildstreifen (25, 26) hin abnehmend angeordnet ist, so dass sich eine gleichmäßige Belichtung der gesamten Druckplatte (10) ergibt.

10. Vorrichtung nach einem der vorhergehenden Ansprüche 1 bis 8, **dadurch gekennzeichnet, dass** die Aufteilung der Bildvorlage in Bildstreifen derart erfolgt, dass die Bildstreifen (25, 26) nahtlos aneinander stoßen und dass die zur Belichtung dienende Lichtmenge pro in Scrollrichtung orientierter Pixelspalte so eingestellt wird, dass der optische Eindruck des linken und rechten Randes der Bildstreifen (25, 26) identisch ist, so dass sich eine gleichmäßige Belichtung der gesamten Druckplatte (10) ergibt.

11. Verfahren zum digitalen Belichten von lichtempfindlichen Materialien unter Verwendung einer Vorrichtung mit einem elektronischen Bildspeicher (2) zum Speichern einer Bildvorlage, mit einer Belichtungseinheit (8), die eine Lichtquelle (22), einen elektronisch ansteuerbaren Lichtmodulator (21) zur Darstellung eines Teilbildes (24) der Bildvorlage und eine Abbildungsoptik (23) zur Projektion des Teilbildes (24) auf das lichtempfindliche Material (10) umfasst, mit einer aus Motoren (9) und einer Motorsteuerung (12) bestehenden Antriebsvorrichtung zur Bewegung der Belichtungseinheit (8) parallel zur Oberfläche des lichtempfindlichen Materials (10), wobei die Belichtung des lichtempfindlichen Materials (10) streifenweise erfolgt, mit einer Scrolleinrichtung (7) zum Scrollen eines Bildstreifens (25, 26) mit den Abmessungen "Lichtmodularbreite mal Bildbreite auf dem lichtempfindlichen Material (10)" der Bildvorlage durch den Lichtmodulator (21) und einer Steuervorrichtung (1) mit Steuerprogramm zur Synchronisierung der Antriebsvorrichtung (9, 12) mit der Scrolleinrichtung (7), **dadurch gekennzeichnet, dass** das Verfahren die Verwendung eines schnellen Zwischenspeichers (16) umfasst, in dem der Bildstreifen (25, 26) der Bildvorlage gespeichert wird, aus dem die Bilddaten für das jeweils zu belichtende Teilbild (24) synchron mit der Bewegung der Belichtungseinheit (8) auf den Lichtmodulator (21) übertragen werden.

12. Verfahren nach Anspruch 11, **dadurch gekennzeichnet, dass** der Zwischenspeicher (16) zwei Teilspeicher (17, 18) für die Speicherung von zwei Bildstreifen (25, 26) der Bildvorlage umfasst und dass während der Übertragung der Daten aus einem ersten Teilspeicher (17) zum Lichtmodulator (21) für die Belichtung eines ersten Bildstreifens (25) die Daten für die Belichtung des nächsten Bildstreifens (26) der Bildvorlage vom Bildspeicher (2) zum zweiten Teilspeicher (18) übertragen werden.

13. Verfahren nach Anspruch 11 oder 12, **dadurch gekennzeichnet, dass** das Steuerprogramm einen Belichtungsdatenmanager (4), einen Bilddatenmanager (6) und einen Positionsdatenmanager (5) umfasst, dass die Bilddaten des Bildspeichers (2) durch den Belichtungsdatenmanager (4) in für die streifenweise Belichtung geeignete Datenpakete aufgeteilt und an den Bilddatenmanager (6) übergeben werden, wobei der Belichtungsdatenmanager (4) Positionsdaten und Geschwindigkeitsdaten für die Motorsteuerung (12) erzeugt, die an den Positionsdatenmanager (5) übergeben werden.

14. Verfahren nach Anspruch 13, **dadurch gekennzeichnet, dass** die Steuervorrichtung (1) die Scrolleinrichtung (7) umfasst, dass die Scrolleinrichtung (7) mit einer hardwaremäßig ausgestalteten Triggerkarte (3) zusammenwirkt, die mit Positionssensoren (13) verbunden ist, dass die Positionssensoren (13) Daten über die tatsächliche Position der Belichtungseinheit (8) liefern, und dass die Triggerkarte (3) den Datenfluss vom Zwischenspeicher (16) zum Lichtmodulator (21) synchron mit der Bewegung der Belichtungseinheit (8) steuert, wobei ein Handshake (28) zwischen Triggerkarte (3) und Motorsteuerung (12) die Motorsteuerung (12) veranlasst, die Positions- und Geschwindigkeitsdaten aus dem Positionsdatenmanager (5) abzurufen und die Servomotoren (9) entsprechend anzusteuern.

15. Verfahren nach Anspruch 14, **dadurch gekennzeichnet, dass** die Scrolleinrichtung (7) mit dem Bilddatenmanager (6) derart zusammenwirkt, dass die streifenweise Übertragung der Bilddaten vom Bilddatenmanager (6) zum Zwischenspeicher (16) immer dann erfolgt, wenn aus dem jeweiligen Teilspeicher (17, 18) gerade keine Daten für die Ansteuerung des Lichtmodulators (21) entnommen werden.

16. Verfahren nach einem der vorhergehenden Ansprüche 11 bis 15,
**dadurch gekennzeichnet, dass** die Belichtungszeit für ein Pixel ungefähr gleich der Fahrzeit ist, die die Belichtungseinheit (8) zum Überfahren einer Pixelbreite benötigt.

17. Verfahren nach einem der vorhergehenden Ansprüche 11 bis 16,
**dadurch gekennzeichnet, dass** die Aufteilung der Bildvorlage in Bildstreifen derart erfolgt, dass sich die Bildstreifen (25, 26) teilweise überlappen und dass die zur Belichtung dienende Lichtmenge pro in Scrollrichtung orientierter Pixelspalte zu den Rändern der Bildstreifen (25, 26) hin abnehmend angeordnet ist, so dass sich eine gleichmäßige Belichtung der gesamten Druckplatte (10) ergibt.

18. Verfahren nach einem der vorhergehenden Ansprüche 11 bis 16,
**dadurch gekennzeichnet, dass** die Aufteilung der Bildvorlage in Bildstreifen derart erfolgt, dass die Bildstreifen (25, 26) nahtlos aneinander stoßen und dass die zur Belichtung dienende Lichtmenge pro in Scrollrichtung orientierter Pixelspalte so eingestellt wird, dass der optische Eindruck des linken und rechten Randes der Bildstreifen (25, 26) identisch ist, so dass sich eine gleichmäßige Belichtung der gesamten Druckplatte (10) ergibt.

## Claims

1. Device for digitally exposing light-sensitive materials, comprising an electronic image memory (2) for storing a master image, an exposure unit (8) which comprises a light source (22), a light modulator (21) that can be actuated electronically for displaying a part image (24) of the master image, and imaging optics (23) for projecting the part image (24) onto the light-sensitive material (10), comprising a drive device consisting of motors (9) and a motor control unit (12) for moving the exposure unit (8) in parallel with the surface of the light-sensitive material (10), the exposure of the light-sensitive materials (10) being carried out in a strip-wise manner, comprising a scroll apparatus (7) for scrolling an image strip (25, 26) of the master image having the dimensions "light modulator width multiplied by image width on the light-sensitive material (10)" through the light modulator (21), and a control device (1) for synchronising the drive device (9, 12) with the scroll apparatus (7), **characterised in that** a rapid intermediate memory (16) for storing the image strip (25, 26) of the master image is provided, from which the image data for the part image (24) to be exposed in each case can be transmitted onto the light modulator (21) synchronously with the movement of the exposure unit (8).

2. Device according to claim 1, **characterised in that** the intermediate memory (16) is arranged in the exposure unit (8).

3. Device according to either claim 1 or claim 2, **characterised in that** the intermediate memory (16) comprises two part memories (17, 18) for storing two image strips (25, 26) of the master image, and **in that**, during the transmission of the data from the first part memory (17) to the light modulator (21) for the exposure of a first image strip (25), the data for the exposure of the next image strip (26) of the master image can be transmitted from the image memory (2) to the second part memory (18).

4. Device according to any of the preceding claims, **characterised in that** the control device (1) consists of a computer having a control program, the image memory (2) also being housed in the computer.

5. Device according to claim 4, **characterised in that** the control program comprises an exposure data manager (4), an image data manager (6) and a position data manager (5), the image data of the image memory (2) being divided by means of the exposure data manager (4) into data packages suitable for the strip-wise exposure, and being transferred to the image data manager (6), the exposure data manager (4) producing position data and speed data for the motor control unit (12), which are transferred to the position data manager (5).

6. Device according to claim 5, **characterised in that** the control device (1) comprises the scroll apparatus (7) which interacts with a trigger card (3) designed as hardware, **in that** the trigger card (3) is connected to position sensors (13) which deliver data on the actual position of the exposure unit (8), and **in that** the trigger card (3) controls the data flow from the intermediate memory (16) to the light modulator (21) synchronously with the movement of the exposure unit (8), a handshake (28) between the trigger card (3) and the motor control unit (12) causing the motor control unit (12) to call up the position and speed data from the position data manager (5) and to accordingly actuate the servomotors (9).

7. Device according to claim 6, **characterised in that** the scroll apparatus (7) interacts with the image data manager (6) in such a manner that the strip-wise transmission of the image data from the image data manager (6) to the intermediate memory (16) is always carried out at precisely the time when no data for the actuation of the light modulator (21) are taken from the relevant part memory (17, 18).

8. Device according to any of the preceding claims, **characterised in that** the exposure time for a pixel is roughly equal to the travel time which the exposure unit (8) requires for travelling over a pixel width.

9. Device according to any of the preceding claims, **characterised in that** the division of the master image into image strips is carried out in such a manner that the image strips (25, 26) overlap in part and that the amount of light, used for exposure, per pixel column oriented in the scroll direction is arranged so as to decrease towards the edges of the image strips (25, 26), producing a uniform exposure of the whole printing plate (10).

10. Device according to any of the preceding claims 1 to 8, **characterised in that** the division of the master image into image strips is carried out in such a manner that the image strips (25, 26) abut on one another in a seamless manner and that the amount of light, used for exposure, per pixel column orientated in the scroll direction is set such that the optical impression of the left and right edge of the image strips (25, 26) is identical, producing a uniform exposure of the entire printing plate (10).

11. Method for digitally exposing light-sensitive materials using a device comprising an electronic image memory (2) for storing a master image, an exposure unit (8) which comprises a light source (22), a light modulator (21) that can be actuated electronically for displaying a part image (24) of the master image, and imaging optics (23) for projecting the part image (24) onto the light-sensitive material (10), comprising a drive device consisting of motors (9) and a motor control unit (12) for moving the exposure unit (8) in parallel with the surface of the light-sensitive material (10), the exposure being carried out in a strip-wise manner, comprising a scroll apparatus (7) for scrolling an image strip (25, 26) of the master image having the dimensions "light modulator width multiplied by image width on the light-sensitive material (10)" through the light modulator (21), and a control device (1) having a control program for synchronising the drive device (9, 12) with the scroll apparatus (7), **characterised in that** the method comprises the use of a rapid intermediate memory (16) in which the image strip (25, 26) of the master image is stored, from which the image data for the part image (24) to be exposed in each case is transmitted onto the light modulator (21) synchronously with the movement of the exposure unit (8).

12. Method according to claim 11, **characterised in that** the intermediate memory (16) comprises two part memories (17, 18) for storing two image strips (25, 26) of the master image, and **in that**, during the transmission of the data from a first part memory (17) to the light modulator (21) for the exposure of a first image strip (25), the data for the exposure of the next image strip (26) of the master image is transmitted from the image memory (2) to the second part memory (18).

13. Method according to either claim 11 or claim 12, **characterised in that** the control program comprises an exposure data manager (4), an image data manager (6) and a position data manager (5), **in that** the image data of the image memory (2) is divided by the exposure data manager (4) into data packages which are suitable for the strip-wise exposure, and are transferred to the picture data manager (6), the exposure data manager (4) producing position data and speed data for the motor control unit (12), which are transferred to the position data manager (5).

14. Method according to claim 13, **characterised in that** the control device (1) comprises the scroll apparatus (7), **in that** the scroll apparatus (7) interacts with a trigger card (3) which is designed as hardware and is connected to position sensors (13), **in that** the position sensors (13) provide data on the actual position of the exposure unit (8), and **in that** the trigger card (3) controls the data flow from the intermediate memory (16) to the light modulator (21) synchronously with the movement of the exposure unit (8), a handshake (28) between the trigger card (3) and the motor control unit (12) causing the motor control unit (12) to call up the position and speed data from the position data manager (5), and to accordingly actuate the servomotors (9).

15. Method according to claim 14, **characterised in that** the scroll apparatus (7) interacts with the image data manager (6) in such a manner that the strip-wise transmission of the image data from the image data manager (6) to the intermediate memory (16) is always carried out precisely at the time when no data for the actuation of the light modulator (21) are taken from the particular part memory (17, 18).

16. Method according to any of the preceding claims 11 to 15, **characterised in that** the exposure time for a pixel is roughly equal to the travel time which the exposure unit (8) requires for travelling over a pixel width.

17. Method according to any of the preceding claims 11 to 16, **characterised in that** the division of the master image into image strips is carried out in such a manner that the image strips (25, 26) overlap one another in part and that the amount of light, used for exposure, per pixel column orientated in the scroll direction is arranged so as to decrease towards the edges of the image strip (25, 26), producing a uniform exposure of the entire printing plate (10).

18. Method according to any of the preceding claims 11 to 16, **characterised in that** the division of the master image into image strips is carried out in such a manner that the image strips (25, 26) abut one another in a seamless manner and that the amount of light, used for exposure, per pixel column orientated in the scroll direction is set such that the optical impression of the left and right edge of the image strip (25, 26) is identical, producing a uniform exposure of the entire printing plate (10).

## Revendications

1. Dispositif d'exposition numérique de matériaux photosensibles, avec une mémoire d'images électronique (2) pour le stockage d'une image originale, avec une unité d'exposition (8) qui comprend une source de lumière (22), un modulateur de lumière (21) à commande électronique pour la représentation d'une image partielle (24) de l'image originale et une optique de reproduction (23) pour la projection de l'image partielle (24) sur le matériau photosensible (10), avec un dispositif d'entraînement composé de moteurs (9) et d'une commande de moteurs (12) pour le déplacement de l'unité d'exposition (8) parallèlement à la surface du matériau photosensible (10), dans lequel l'exposition du matériau photosensible (10) a lieu bande par bande, avec un système de défilement (7) pour faire défiler une bande d'images (25, 26) avec les dimensions « largeur du modulateur de lumière x largeur d'image sur le matériau photosensible (10) » de l'image originale par le modulateur de lumière (21) et avec un dispositif de commande (1) pour la synchronisation du dispositif d'entraînement (9, 12) avec le système de défilement (7), **caractérisé en ce qu'**il est prévu une mémoire temporaire (16) rapide pour la mémorisation de la bande d'image (25, 26) de l'image originale à partir de laquelle les données d'image pour ladite image partielle (24) à exposer peuvent être transmises en synchronisation avec le déplacement de l'unité d'exposition (8) sur le modulateur de lumière (21).

2. Dispositif selon la revendication 1, **caractérisé en ce que** la mémoire temporaire (16) est disposée dans l'unité d'exposition (8).

3. Dispositif selon la revendication 1 ou 2, **caractérisé en ce que** la mémoire temporaire (16) comprend deux mémoires partielles (17, 18) pour la mémorisation de deux bandes d'image (25, 26) de l'image originale et **en ce que**, durant la transmission des données d'une première mémoire partielle (17) au modulateur de lumière (21) pour l'exposition d'une première bande d'image (25), les données pour l'exposition de la prochaine bande d'image (26) de l'image originale peuvent être transmises par la mémoire d'images (2) à la seconde mémoire partielle (18).

4. Dispositif selon l'une quelconque des revendications précédentes, **caractérisé en ce que** le dispositif de commande (1) se compose d'un ordinateur avec un programme de commande, dans lequel la mémoire d'images (2) est également logée dans l'ordinateur.

5. Dispositif selon la revendication 4, **caractérisé en ce que** le programme de commande comprend un gestionnaire de données d'exposition (4), un gestionnaire de données d'image (6) et un gestionnaire de données de position (5), dans lequel les données d'image de la mémoire d'images (2) sont réparties par le gestionnaire de données d'exposition (4) dans des paquets de données appropriés pour l'exposition bande par bande et remises au gestionnaire de données d'image (6), dans lequel le gestionnaire de données d'exposition (4) génère des données de position et des données de vitesse pour la commande de moteurs (12) qui sont remises au gestionnaire de données de position (5).

6. Dispositif selon la revendication 5, **caractérisé en ce que** le dispositif de commande (1) comprend le système de défilement (7) qui coopère avec une carte de déclenchement (3) conçue sous forme matérielle, **en ce que** la carte de déclenchement (3) est reliée à des capteurs de position (13) qui fournissent des données sur la position réelle de l'unité d'exposition (8) et **en ce que** la carte de déclenchement (3) commande le flux de données de la mémoire temporaire (16) au modulateur de lumière (21) en synchronisation avec le déplacement de l'unité d'exposition (8), dans lequel une prise de contact (28) entre la carte de déclenchement (3) et la commande de moteurs (12) amène la commande de moteurs (12) à appeler les données de position et de vitesse du gestionnaire de données de position (5) et à commander de manière correspondante les servomoteurs (9).

7. Dispositif selon la revendication 6, **caractérisé en ce que** le système de défilement (7) coopère avec le gestionnaire de données d'image (6) de manière telle que la transmission bande par bande des données d'image du gestionnaire de données d'image (6) à la mémoire temporaire (16) a toujours lieu lorsqu'aucunes données pour la commande du modulateur de lumière (21) ne sont justement prélevées de la mémoire partielle (17, 18) concernée.

8. Dispositif selon l'une quelconque des revendications précédentes, **caractérisé en ce que** le temps d'exposition pour un pixel est à peu près le temps de déplacement que l'unité d'exposition (8) a besoin pour parcourir une largeur de pixel.

9. Dispositif selon l'une quelconque des revendications précédentes, **caractérisé en ce que** la répartition de l'image originale en des bandes d'image a lieu de manière telle que les bandes d'image (25, 26) se recouvrent partiellement et que la quantité de lumière servant à l'exposition soit agencée par intervalle de pixel orienté dans le sens de défilement de manière décroissante vers les bords de la bande d'image (25, 26) de sorte qu'il en résulte une exposition uniforme de toute la planche d'impression (10).

10. Dispositif selon l'une quelconque des revendications 1 à 8, **caractérisé en ce que** la répartition de l'image originale en des bandes d'image a lieu de manière telle que les bandes d'image (25, 26) soient contiguës les unes aux autres sans raccord et que la quantité de lumière servant à l'exposition soit réglée par intervalle de pixel orienté dans le sens de défilement de sorte que l'impression optique du bord gauche et du bord droit des bandes d'image (25, 26) soit identique de sorte qu'il en résulte une exposition uniforme de toute la planche d'impression (10).

11. Procédé d'exposition numérique de matériaux photosensibles à l'aide d'un dispositif avec une mémoire d'images électronique (2) pour le stockage d'une image originale, avec une unité d'exposition (8) qui comprend une source de lumière (22), un modulateur de lumière (21) à commande électronique pour la représentation d'une image partielle (24) de l'image originale et une optique de reproduction (23) pour la projection de l'image partielle (24) sur le matériau photosensible (10), avec un dispositif d'entraînement composé de moteurs (9) et d'une commande de moteurs (12) pour le déplacement de l'unité d'exposition (8) parallèlement à la surface du matériau photosensible (10), dans lequel l'exposition du matériau photosensible (10) ayant lieu bande par bande, avec un système de défilement (7) pour faire défiler une bande d'images (25, 26) avec les dimensions « largeur du modulateur de lumière x largeur d'image sur le matériau photosensible (10) » de l'image originale par le modulateur de lumière (21) et avec un dispositif de commande (1) avec un programme de commande pour la synchronisation du dispositif d'entraînement (9, 12) avec le système de défilement (7), **caractérisé en ce que** le procédé comprend l'emploi d'une mémoire temporaire (16) rapide dans laquelle la bande d'image (25, 26) de l'image originale est mémorisée, à partir de laquelle les données d'image pour ladite image partielle (24) à exposer sont transmises en synchronisation avec le déplacement de l'unité d'exposition (8) sur le modulateur de lumière (21).

12. Procédé selon la revendication 11, **caractérisé en ce que** la mémoire temporaire (16) comprend deux mémoires partielles (17, 18) pour la mémorisation de deux bandes d'image (25, 26) de l'image originale et **en ce que**, durant la transmission des données d'une première mémoire partielle (17) au modulateur de lumière (21) pour l'exposition d'une première bande d'image (25), les données pour l'exposition de la prochaine bande d'image (26) de l'image originale peuvent être transmises de la mémoire d'images (2) à la seconde mémoire partielle (18).

13. Procédé selon la revendication 11 ou 12, **caractérisé en ce que** le programme de commande comprend un gestionnaire de données d'exposition (4), un gestionnaire de données d'image (6) et un gestionnaire de données de position (5), **en ce que** les données d'image de la mémoire d'images (2) sont réparties par le gestionnaire de données d'exposition (4) dans des paquets de données appropriés pour l'exposition bande par bande et remises au gestionnaire de données d'image (6), dans lequel le gestionnaire de données d'exposition (4) génère des données de position et des données de vitesse pour la commande de moteurs (12) qui sont remises au gestionnaire de données de position (5).

14. Procédé selon la revendication 13, **caractérisé en ce que** le dispositif de commande (1) comprend le système de défilement (7), **en ce que** le système de défilement (7) coopère avec une carte de déclenchement (3) conçue sous forme matérielle qui est reliée à des capteurs de position (13), **en ce que** les capteurs de position (13) fournissent des données sur la position réelle de l'unité d'exposition (8) et **en ce que** la carte de déclenchement (3) commande le flux de données de la mémoire temporaire (16) au modulateur de lumière (21) en synchronisation avec le déplacement de l'unité d'exposition (8), dans lequel une prise de contact (28) entre la carte de déclenchement (3) et la commande de moteurs (12) amène la commande de moteurs (12) à appeler les données de position et de vitesse du gestionnaire de données de position (5) et à commander de manière correspondante les servomoteurs (9).

15. Procédé selon la revendication 14, **caractérisé en ce que** le système de défilement (7) coopère avec le gestionnaire de données d'image (6) de manière telle que la transmission bande par bande des données d'image du gestionnaire de données d'image (6) à la mémoire temporaire (16) a toujours lieu lorsqu'aucunes données pour la commande du modulateur de lumière (21) ne sont justement prélevées de la mémoire partielle (17, 18) concernée.

16. Dispositif selon l'une quelconque des revendications précédentes 11 à 15, **caractérisé en ce que** le temps d'exposition pour un pixel est à peu près le temps de déplacement que l'unité d'exposition (8) a besoin pour parcourir une largeur de pixel.

17. Dispositif selon l'une quelconque des revendications précédentes 11 à 16, **caractérisé en ce que** la répartition de l'image originale en des bandes d'image a lieu de manière telle que les bandes d' image (25, 26) se recouvrent partiellement et que la quantité de lumière servant à l'exposition soit agencée par intervalle de pixel orienté dans le sens de défilement de manière décroissante vers les bords de la bande d'image (25, 26) de sorte qu'il en résulte une exposition uniforme de toute la planche d'impression (10).

18. Procédé selon l'une quelconque des revendications précédentes 11 à 16, **caractérisé en ce que** la répartition de l'image originale en des bandes d'image a lieu de manière telle que les bandes d'image (25, 26) soient contiguës les unes aux autres sans raccord et que la quantité de lumière servant à l'exposition soit réglée par intervalle de pixel orienté dans le sens de défilement de sorte que l'impression optique du bord gauche et du bord droit des bandes d'image (25, 26) soit identique de sorte qu'il en résulte une exposition uniforme de toute la planche d'impression (10).
